# EUROPEAN PATENT APPLICATION

(11) **EP 2 119 350 A1**
(43) Date of publication of application: **18.11.2009**
(21) Application number: 08750395.9
(22) Date of filing: 12.03.2008
(51) Int. Cl.: A01K 91/08

(54) **BAIT SINKER FOR TROLLING FISHING**

(30) Priority: 13.03.2007 ES 200700625 U
(71) Applicant: Palacios Cortell, Abelardo León, 46410-Sueca (Valencia) (ES)
(72) Inventor: Palacios Cortell, Abelardo León, 46410-Sueca (Valencia) (ES)
(74) Representative: Tari Lazaro, Aida
(86) International application number: PCT/ES2008/000155
(87) International publication number: WO 2008/110650

(57) **Abstract**

The invention relates to a device that is used to sink bait from a vessel during trolling fishing, **characterised in that** it comprises a body formed by two arms, namely a vertical arm and a horizontal arm that are attached to the gunwale of the boat. Two pulleys are attached independently to the horizontal arm and can rotate independently of one another, each pulley being provided with a securing wire. One of said wires is used to secure a heavy body and the other wire is used to secure a small sheave joined to a clip which ensures that the bait remains attached to the fishing line while being lowered and raised to the desired depth. When the heavy body is cast from the device, by rotating the pulley thereof, the wire securing same is maintained in a vertical position in respect of the boat. The small clip-fitted sheave is inserted into the heavy body securing wire. The fishing line and bait are lowered by rotating the pulley joined to the small sheave and clip that holds the fishing line steady and, in this way, the corresponding wire is cast from the device. Subsequently, owing to the movement of the boat, the sheave and clip are guided vertically towards the heavy body, which has been independently cast to the desired depth, by the wire securing same. The wire used to secure the small sheave and clip is retrieved by rotating the pulley thereof, such that it rises towards the boat, with the heavy body staying at the desired depth. The invention also includes a direct-current motor having a forwards or backwards rotational movement which rotates the pulley between the wire and the small clip-fitted sheave, thereby transmitting the lowering/raising movement from the fishing line joined thereto.

## Description

### Object of the invention

This invention relates to a device for lowering and raising the fishing line securing the bait to and from the desired depth, in trolling fishing from a vessel. The device will have two arms, one vertical and the other horizontal, joined together and forming an angle of approximately 90°, with two pulleys, one with a certain amount of wire in its groove. They will be arranged in the horizontal arm, but will be independent in their securing. The first of the pulleys will have a body secured to its wire, sufficiently heavy for keeping it taut down to the bottom, even with the movement of the boat. The wire for the second pulley will have a small sheave attached to its end, which will have a clip joined to it, which will secure the fishing line running from the rod to the fishing bait.

The object of the invention is to get the clip to lightly secure and attach the fishing line of the rod with the fishing bait, whether it is being raised or lowered to or from the desired depth, independently of a heavy body which is what would perform this function on account of its density.

The small sheave with the clip slides and is guided via the wire for the first pulley which secures the heavy body, giving it the desired maximum depth. This independence of the clip with regard to the heavy body facilitates the task of securing the fishing line holding the bait, since when the clip is opened due to any circumstance, it merely has to be raised with the small sheave, which is inserted in the wire running to the heavy body, with the latter remaining in the deep due to being independent. The lowering of the clip, once the line of the fishing rod has been inserted in it again, will slide and be guided in a descending manner, via the vertical wire of the first pulley, towards the heavy body.

The lowering operation will be aided by taking advantage of the force of the pressure exerted by the current in the downward direction, due to the vessel being in movement.

### Background of the invention

In order to be able to lower the fishing line with the bait to a chosen depth in trolling fishing, an apparatus is used consisting of two arms, one of which secures a pulley with a wire which ends in a heavy body. The heavy body bears a clip which will guide the line of the rod with the bait down to the bottom.

Each time the clip is opened due to the tension of the line of the fishing rod, the heavy body with its clip has to be raised to the surface so that the line with the bait can be inserted in it again and then lowered with the heavy body to the chosen depth. With the device described above, we will be able to raise and lower just the clip securing the fishing line of the rod with the bait, which will be guided by the small sheave via the wire ending in the heavy body. In this way, the heavy body does not need to be raised up and, being independent, it remains at all times at the desired maximum depth, maintaining the wire joining it to its pulley vertical down to the bottom, and it will continue to be the guide for the small sheave with the clip.

The existing apparatus only raises and lowers the heavy body with its clip. But the heavy body with the clip does not have any independence. The small sheave with the clip at all times slides on the wire as far as the heavy body, taking advantage of the fact that the movement of the boat produces a downwards pressure on the small sheave towards the bottom, via the vertical wire which joins the heavy body submerged in the bottom with its respective pulley.

### Description of the invention

The device has been conceived for solving the problem stated above, on the basis of a simple but very effective solution. To achieve this, the device is constituted on the basis of a body fitted in the gunwale of the vessel. It has a vertical arm joined to another horizontal one forming an angle of approximately 90°. Secured to the horizontal arms are two pulleys independent in their position and movement. Both are provided with sufficient wire for securing a heavy body to the first of them and a small sheave to the second, which sheave will have attached to it the securing clip for the line of the fishing rod with the bait. The horizontal arm is arranged attached to the vertical arm which is secured in the gunwale of the boat and will keep the device firm against the continual working effort of both pulleys. The first pulley is secured on one side of the horizontal arm and its rotation forwards and backwards will allow the wire it contains attached to the heavy body to lower and raise it to and from the desired depth. The second pulley also secured on one side of the horizontal arm of the device, with its rotation forwards and backwards, will permit the wire it contains and which is attached to the small sheave to raise and lower the latter due to its being inserted in the wire running from the first pulley to the heavy body. The small sheave will be guided towards it via the wire securing it and which is in the vertical position towards the bottom, at all times keeping its fixed route of raising and lowering to and from the chosen depth. This operation of raising and lowering of the small sheave will be transmitted to the clip attached to it, and this in turn to the line of the fishing rod with the bait.

In order to facilitate the task of rotating the pulley for raising and lowering of the small sheave, a direct-current motor will be incorporated having circular rotation with a control for providing forwards and backwards rotation.

### Description of the drawings

In order to complement the description that is being made, and with the aim of aiding a better understanding of the characteristics of the invention, in accordance with a preferred example of a practical embodiment thereof, accompanied as an integral part of this description is a set of drawings in which, on an illustrative rather than limiting basis, the following has been represented:

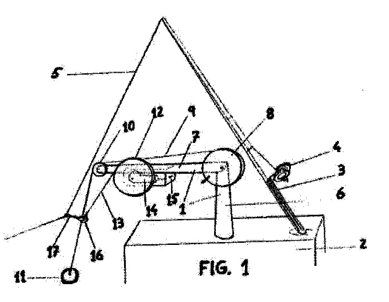

Figure 1.- Shows a general perspective of the device, in the operating position, located on the gunwale of the vessel and connected to the wire of a fishing rod provided on said gunwale.

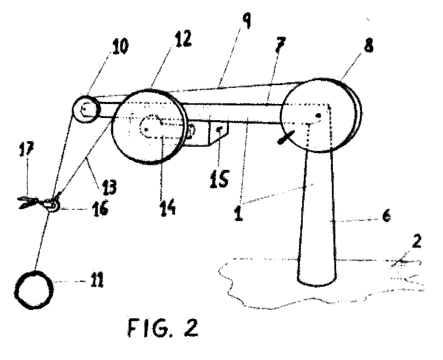

Figure 2.- Shows a general perspective of the working operation of the device.

Preferred embodiment of the invention.

With the stated figures in view, it can be seen how the device of the invention is constituted on the basis of a body (1) on the gunwale (2) of a vessel, on which is in turn provided a fishing rod (3), as is conventional, with its reel (4) and its fishing line (5) carrying at its free end the respective bait. The body (1) consists of a vertical arm (6) joined to a horizontal arm (7). The horizontal arm (7) will have on one side a pulley (8) for forward and backward movement with its respective wire (9). It will be fitted in the vertex formed between the vertical arm (6) and the horizontal arm (7).

The wire (9) of the pulley (8) will be guided by a small pulley (10) secured in the end vertex of the arm (7). The wire (9) will end attached to a heavy body (11).

Provided in the middle of the arm (7) is a second pulley (12) for forward and backward movement with its respective wire (13). This pulley will incorporate a direct-current motor (14) having rotating movement.

It will be provided with a push-button (15) whose change of polarity of the direct current from positive to negative and vice versa will give the pulley (12) its alternating movement forward and backward.

The end of the wire (13) is attached to a small sheave (16) which will have a clip (17) attached to it which will secure the fishing line (5). The small sheave (16) will be inserted in the wire (9) which will be guided as far as the heavy body (11) and the pulley (12) in its movement forward and backward will cause it to be raised and lowered to and from the desired depth for the clip (17) securing the fishing line (5), independently of the depth of the heavy body (11).

## Claims

1. Device for sinking bait from a vessel during trolling fishing, **characterised in that** it comprises a body formed by two arms, namely a vertical arm and a horizontal arm that are attached to the gunwale of the boat. Two pulleys are attached independently to the horizontal arm and can rotate independently of one another, each pulley being provided with a securing wire. One of said wires is used to secure a heavy body and the other wire is used to secure a small sheave joined to a clip which ensures that the bait remains attached to the fishing line while being lowered and raised to the desired depth. When the heavy body is cast from the device, by rotating the pulley thereof, the wire securing same is maintained in a vertical position in respect of the boat. The small clip-fitted sheave is inserted into the heavy body securing wire. The fishing line and bait are lowered by rotating the pulley joined to the small sheave and clip that holds the fishing line steady and, in this way, the corresponding wire is cast from the device. Subsequently, owing to the movement of the boat, the sheave and clip are guided vertically towards the heavy body, which has been independently cast to the desired depth, by the wire securing same. The wire used to secure the small sheave and clip is retrieved by rotating the pulley thereof, such that it rises towards the boat, with the heavy body staying at the desired depth.

2. Device for sinking bait from a vessel during trolling fishing according to claim 1, **characterised in that** it includes a direct-current motor having a forwards or backwards rotational movement which rotates the pulley between the wire and the small clip-fitted sheave, thereby transmitting the lowering/raising movement from the fishing line joined thereto.
